# EUROPEAN PATENT SPECIFICATION

(11) **EP 3 166 418 B1**
(45) Date of publication and mention of the grant of the patent: **27.02.2019**
(21) Application number: 15732017.7
(22) Date of filing: 01.06.2015
(51) Int. Cl.: A23J 3/26, A23L 15/00

(54) **VICIA FABA PROTEIN FOOD PRODUCTS**
VICIA-FABA-PROTEINNAHRUNGSMITTEL
PRODUITS ALIMENTAIRES RENFERMANT LA PROTÉINE DE VICIA FABA

(30) Priority: 03.06.2014 GB 201409881
(43) Date of publication of application: 17.05.2017
(73) Proprietor: Verso Food Oy, 01620 Vantaa (FI)
(72) Inventor: OLLILA, Tarja, FI-00670 Helsinki (FI)
(74) Representative: Suominen, Kaisa Liisa
(86) International application number: PCT/FI2015/050379
(87) International publication number: WO 2015/185800

(56) References cited:
- CA-A1- 1 075 968
- FR-A1- 2 340 054
- GB-A- 2 132 206
- US-A- 5 904 943
- US-A1- 2006 073 261

## Description

### FIELD OF THE PRESENT DISCLOSURE

The present disclosure and embodiments included therein are directed to broad bean (*Vicia faba*) protein food products and processes used to make the protein food products.

### DESCRIPTION OF THE RELATED ART

A significant amount of the plant based protein is used for meat and milk production in the form of fodder (or animal feed). Fodder or animal feed is any agricultural foodstuff used specifically to feed domesticated livestock, such as cattle, goats, sheep, horses, chickens and pigs and is generally of plant origin, although some can be of animal origin as well. "Fodder" generally refers to food given to the animals (including plants cut and carried to them), rather than that which the animals forage for themselves. It generally includes hay, straw, silage, compressed and pelleted feeds, oils and mixed rations, and sprouted grains and legumes.

The worldwide animal feed industry consumed 635 million tons of feed (compound feed equivalent) in 2006, with an annual growth rate of about 2 %. The use of agricultural land to grow animal feed rather than human food can be controversial; some types of feed, such as corn (maize), can also serve as human food. Those that cannot, such as grassland grass, may be grown on land that could otherwise be used for crops suitable for human consumption. Some other agricultural byproducts fed to animals may also be considered unsuitable for human consumption.

Additionally, carbon and water foot prints for animal based protein foods compared to vegetable based protein foods is significantly higher. The production of vegetable based protein foods use five times less CO₂ and two and a half times less water compared with the equal amount of animal based protein foods.

As a result, there is increasing demand for plant (vegetable) based protein foods due to the continued increase in the world's population. Also, there is the additional need to feed this ever increasing population with protein-based foods that are nutritionally balanced.

The main challenge for such plant based foods is to ensure that they allow for sufficient protein intake. An additional problem is to provide food products that have a structure, texture, color, mouth feel, etc. acceptable to consumers as well as to the food retail and manufacturing industry. For example, usage of flour is beneficial from the aspect of storage and transportation, but its uses typically tend to be narrow.

Some vegetable food products should have the proper texture to enable them to be used widely. For example, soy is mainly used in different forms (e.g. flour, textured protein) as a protein source to increase protein content in vegetable food. However, there can be a question whether or not it is produced from genetically modified organism (GMO) plants. Also, there is a growing population among consumers that have an allergic reaction towards soy protein.

As a result, there is a need to find a replacement for soy as a protein source in food. Document Document FR 2340054 discloses a manufacturing method of textured vegetable proteins by mixing a paste containing 5-12 wt-% water and 95-88 wt-% of a leguminous flour having fatty content below 5 wt-%, vegetable protein content 55-75 wt-% and water content 8-12 wt-%. While maintained under pressure, the temperature of the paste is progressively raised to 200-300 °C, while the water/flour mixture is held above 100 °C for less than 2 minutes. The product is then extruded through a die having one or more orifices. Document GB 2132206 concerns a smooth, elastic and even protein fibres that are formed by extruding a mixture of protein micellar mass (PMM) and gellable starch into hot water. The starch may be present in an amount up to about 30 wt-% of the PMM. The fibres are useful in a variety of food analog products. Document CA 1075968 discloses a method of texturizing a flour having a substantial legume content comprising the steps of forming a flour into a pumpable aqueous slurry; said slurry being pumpable at pressures of less than 200 pounds per square inch; generating a source of steam; passing the slurry and steam through a cooker wherein they become intimately mixed and the flour becomes heated to at least 115 °C to texturize the slurry; and collecting and cooling the slurry after passage through the cooker; the aqueous slurry having at least 20 % protein (% nitrogen x 6.25).

### SUMMARY

The present disclosure relates to a protein food product comprising *Vicia faba* and pea protein wherein the total protein content is in the range of from 45 weight% to 55 weight% and the *Vicia faba*:pea protein ratio is in the range of from 1.1 to 1.8.

The present disclosure further relates to a process for making a protein food product comprising *Vicia faba* and pea protein comprising the steps of mixing dry ingredients comprising *Vicia faba* and pea protein to form a mixture; processing the mixture through an extruder; and drying the extruded material, wherein the total protein content is in the range of from 45 weight% to 55 weight% and the *Vicia faba*:pea protein ratio is in the range of from 1.1 to 1.8.

### BRIEF DESCRIPTION OF THE DRAWINGS

FIG. 1 - Illustrates an alternative workflow/flowchart for the process of making smaller scale quantities of the protein food products of the present disclosure.
FIG. 2 - Illustrates a workflow/flowchart for the process of making larger production scale quantities of the protein food products of the present disclosure.

### DETAILED DESCRIPTION

In the following specification and the claims, which follow, reference will be made to a number of terms, which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", is not to be limited to the precise value specified. In some instances, the approximating language may correspond to the precision of an instrument for measuring the value. The ratios given are weight ratios.

The present disclosure is generally directed toward protein food products that include *Vicia faba* in combination with pea protein. The protein food products may also include *Vicia faba* and pea protein in combination with animal-based protein including, for example, egg white.

Protein food products in the present disclosure can be used in stews, casseroles, soups, burgers, smoothies and as breakfast cereals. Such products give thicker and improved texture by binding water in the foods in which they are used.

*Vicia faba,* also known as the broad bean, fava bean, faba bean, field bean, bell bean, or tic bean, is a species of bean (*Fabaceae*) native to North Africa, Southwest and South Asia, and extensively cultivated also elsewhere. In 100 g of broad bean there is about 58.29 g of carbohydrates, 25 g of fibers, 1.53 g of fat and 26.12 g of protein. In addition broad bean has, for example, the following vitamins and nutrients (with % of daily intake recommended for adults, source USDA nutrient database):

| | |
|---|---|
| Thiamine (vitamin B1) | 0.555 mg (48 %) |
| Riboflavin (vitamin B2) | 0.333 mg (28 %) |
| Niacin (vitamin B3) | 2.832 mg (19 %) |
| Vitamin B6 | 0.366 mg (28 %) |
| Folate (vitamin B9) | 423 µg (106 %) |
| Vitamin C | 4 mg (2 %) |
| Vitamin K | 9 µg (9 %) |
| Calcium | 103 mg (10 %) |
| Iron | 6.7 mg (52 %) |
| Magnesium | 192 mg (54 %) |
| Manganese | 1.626 mg (77 %) |
| Phosphorus | 421 mg (60 %) |
| Potassium | 1062 mg (23 %) |
| Sodium | 13 mg (1 %) |
| Zinc | 3.14 mg (33 %) |

*Vicia faba* flour is generally available or can be produced using known methods and equipment, for example, by grinding whole dried beans in a hammer mill.

Pea protein is generally available and, for example, is sold as Nutralys (RTM) F85M manufactured by Roquette France (Nutritional facts: 85 % protein in dry matter).

The present disclosure relates to a protein food product comprising *Vicia faba* and pea protein wherein the total protein content is in the range of from 45 weight% to 55 weight% and the *Vicia faba*:pea protein ratio is in the range of from 1.1 to 1.8. Preferably, the amount of *Vicia faba* is from 50 weight% to 60 weight%, more preferably 55 weight%. Preferably, the amount of pea protein is from 35 weight% to 45 weight%, more preferably 40 weight%. The ratio of protein from pea protein to protein from *Vicia faba* is preferably from 2.9 to 1.8.

The protein food products may also include malt, preferably Barley malt extract, to provide, for example, improved color as well as a rounder taste and firmer texture. Barley malt extract is generally available and, for example, is sold as Maltax 40 manufactured by Senson Finland (Nutritional facts: Brix 80-82, pH 5,0-6,0, protein 4-8 % in dry matter). Preferably, the amount of barley malt is 4-6 weight%, more preferably 5 weight%.

One protein food product according this disclosure comprises 50 weight% to 60 weight% *Vicia faba;* 35 weight% to 45 weight% pea protein; and 4-6 weight% malt. Another possible protein food product according to this disclosure comprises 55 weight% *Vicia faba;* 40 weight% pea protein; and 5 weight% malt.

Protein food products of the present disclosure may also include egg white as an additional protein source. Egg white powder is generally available and, for example, is sold by Bouwhuis Enthoven and by Egg Center Group (Nutritional facts: Bouwhuis Enthoven - protein content >85 %, Egg Center Group - protein content 82.4 %).

The present disclosure also relates to a process for making a protein food product comprising *Vicia faba* and pea protein comprising the steps of mixing dry ingredients comprising *Vicia faba* and pea protein to form a mixture, processing the mixture through an extruder and drying the extruded material. In this process, the total protein content is in the range of from 45 weight% to 55 weight% and the *Vicia faba*:pea protein ratio is in the range of from 1.1 to 1.8. According to an embodiment, the extrusion step further comprises separately and substantially simultaneously feeding malt to the extruder to form a malt and dry ingredients extruded material.

According to an embodiment, the extruder temperature is in the range from 144 °C to 147 °C, preferably at about 145 °C. According to another embodiment, the extruded material comprises 4-6 weight% malt, preferably the malt is barley malt extract. The dry ingredients may also comprise egg white.

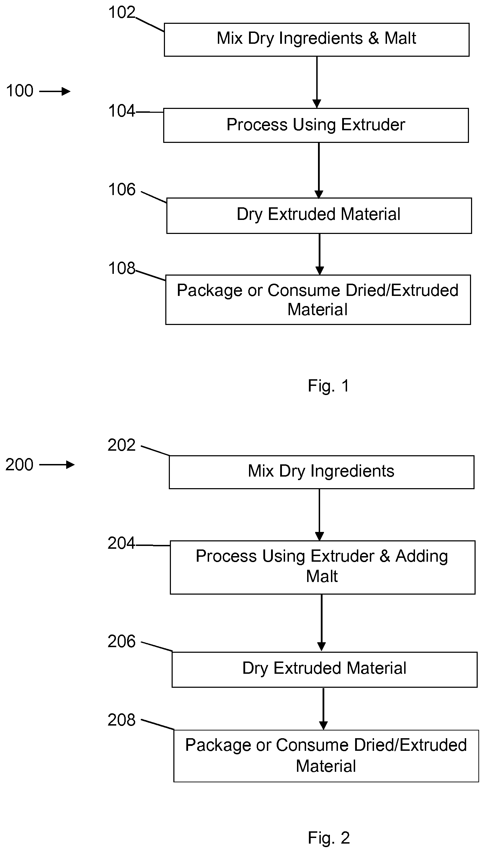

Fig. 1 and Fig. 2 illustrate the basic workflow for making the protein food products of the present disclosure. Fig. 1 illustrates an alternative process 100 for smaller scale quantities and begins by first mixing the dry ingredients (for example, *Vicia faba* flour, pea protein, egg white powder) and malt in step 102 using, for example, a hand mixer (for example, a Bamix (RTM) hand mixer). The resulting material (consisting of the dry ingredients and malt) is then processed through an extruder in step 104 (for example, a Clextral (RTM) BC82). In this exemplified embodiment for the extruder, the temperature setting is preferably from 144 °C to 147 °C, the feeding speed of the material is preferably run by driving the motor with alternative current of about 14 Hz, (resulting to speed of 14/50 of the nominal speed of the motor) the feeding speed of water is preferably about 0.4 l/min, and the speed of the cutter is preferably run by driving a motor with alternative current of about 25 Hz (resulting in a speed of 25/50 of the nominal speed of the cutter). The extruded material is dried in step 106 on, for example, a belt dryer manufactured by Oy Petsmo Products Ab. In this exemplified embodiment, a belt dryer preferably has two blowers and a leveler at the starting point of the conveyor belt. The length of the belt is preferably about 5 meters and the width of the belt is preferably about 0.87 meters; the drying temperature is preferably about 51.6 °C at the beginning where a first blower is positioned and preferable about 28.5 °C at the end where a second blower is positioned; and the speed of the conveyor belt is preferably about 2 m/min. The dried material can be consumed or packaged in step 108 (for example, in a cardboard box using, for example, a Betti carton packaging machine) and stored in ambient temperature.

Fig. 2 illustrates a process 200 for larger production scale quantities and begins by first mixing the dry ingredients in step 202 (for example, *Vicia faba* flour, pea protein, egg white powder) using, for example, a drum mixer (for example, a model number P-100-1000 manufactured by Oy Petsmo Products Ab). The resulting material (the mixed dry ingredients) is then processed through an extruder and malt can be added in step 204, for example, by feeding it to the extruder with, for example, a separate pump while the mixed dry ingredients are fed through the extruder using conditions and equipment similar to those for smaller scale quantities. The extruded material is dried in step 206 using conditions and equipment similar to those for smaller scale quantities. The dried material can be consumed or packaged in step 208 using conditions and equipment similar to those for smaller scale quantities.

It is to be understood that the conditions described above are only given as an example and that a person skilled in the art is readily able to find out optimal conditions for the process, when using other types of machinery.

The examples and comparative examples (commonly referred to as examples below) set forth herein further describe and demonstrate embodiments within the scope of the present invention. The examples are given solely for the purpose of illustration and are not to be construed as limitations of the present invention, as many variations thereof are possible.

For each of the examples, the dry ingredients (for example, *Vicia faba* flour, pea protein, egg white powder) and barley malt extract (if present) were mixed with a Bamix (RTM) hand mixer. The resulting material was then processed through a Clextral (RTM) BC82 extruder, using a pillow die. The settings for the extrusion process are following:

| | At the start of the process | At the end of the process |
|---|---|---|
| Temperature setting, °C | 145 | 145 |
| Temperature, °C: | 144 to 145 | 147 to 145 |
| Feeding speed of the flour, Hz | 14 | 14 |
| Feeding speed of water, l/min | 0.4 | 0.4 |
| Speed of the cutter, Hz | 25 | 25 |

The extruded material was dried on belt dryer (manufactured by Oy Petsmo Products Ab) and the dried material was packed.

Each of the examples was evaluated (See Table 1 for results). A dilution test was conducted on Examples 6 to 15 to find out the texture and the water binding capacity of the end product of each of these examples. The test involved 1 dl of boiling water being poured on top of 1 dl of the end product of the example in a cup. The cup contents stood for 10 minutes after which the texture of the end product was evaluated as well as the amount of water present in the cup. Grades were given from 1 (low score) to 5 (high score) based on the amount of water left in the cup after dilution and the softness of the end product (grade 1: most of the water not soaked the product and end product very soft, quite a lot of "flour" on the bottom of the cup; grade 2: still a lot of water not soaked and end product soft, some "flour" on the bottom of the cup; grade 3: still some water not soaked and end product soft, quite a little "flour" on the bottom of the cup; grade 4: all water immediately soaked and end product formed a very thick texture; and grade 5: main part of water soaked and end product formed a nice thick texture).

**Table 1**

| | **Composition** | **Appearance and Dilution Test Results** |
|---|---|---|
| **Comparative example 1** | 100 % *Vicia faba* flour | Looked like fried minced meat & grey in color - no dilution test conducted |
| **Comparative example 2** | 90 % *Vicia faba* flour, 10 % pea protein F85M Roquette | Looked like fried minced meat & grey in color - no dilution test conducted |
| **Comparative example 3** | 85 % *Vicia faba* flour, 15 % pea protein F85M Roquette | Looked like fried minced meat & grey in color - no dilution test conducted |
| **Comparative example 4** | 98 % *Vicia faba* flour, 2 % barley malt extract Maltax 10 | Looked like fried minced meat - no dilution test conducted |
| **Comparative example 5** | 95 % *Vicia faba* flour, 5 % barley malt extract Maltax 10 | Looked like fried minced meat - no dilution test conducted |
| **Comparative example 6** | 75 % *Vicia faba* flour, 20 % pea protein F85M Roquette, 5 % barley malt extract Maltax 40 | Dilution test made - main part of water did not soak into the end product and the end product was forming a flour sediment in the bottom of the cup - the texture of the diluted product: grade 2 |
| **Comparative example 7** | 65 % *Vicia faba* flour, 30 % pea protein F85M Roquette, 5 % barley malt extract Maltax 40 | Dilution test made - still quite a lot of water did not soak into the end product and the end product was forming a flour sediment in the bottom of the cup - the texture of the diluted product: grade 2 |
| **Example 8** | 60 % *Vicia faba* flour, 35 % pea protein F85M Roquette, 5 % barley malt extract Maltax 40 | Dilution test made - still quite some amount of water did not soak into the end product and the end product was forming a flour sediment in the bottom of the cup nice thick texture - the texture of the diluted product: grade 3 |
| **Example 9** | 55 % *Vicia faba* flour, 40 % pea protein F85M Roquette, 5 % barley malt extract Maltax 40 | Dilution test made - main part of water soaked into the end product and the end product was forming a nice thick texture - the texture of the diluted product: grade 5 |
| **Example 10** | 50 % *Vicia faba* flour, 45 % pea protein F85M Roquette, 5 % barley malt extract Maltax 40 | Dilution test made - all the water soaked into the end product immediately and the end product was forming very thick texture - the texture of the diluted product: grade 4 |
| **Comparative example 11** | 75 % *Vicia faba* flour, 25 % egg white powder Bouwhuis Enthoven | Dilution test made - Not hard enough texture after dilution test: grade 3 |
| **Comparative example 12** | 72,5 % *Vicia faba* flour, 12,5 % pea protein F85M Roquette, 12,5 % egg white powder Bouwhuis Enthoven, 2,5 % barley malt extract Maltax 40 | Dilution test made - soft texture after dilution test: grade 3 |
| **Comparative example 13** | 55 % *Vicia faba* flour, 30 % pea protein F85M Roquette, 10 % egg white powder Bouwhuis Enthoven, 5 % barley malt extract Maltax 40 | Dilution test made - soft texture after dilution test: grade 3 |
| **Comparative example 14** | 25 % *Vicia faba* flour, 45 % pea protein F85M Roquette, 25 % egg white powder Bouwhuis Enthoven,5 % barley malt extract Maltax 40 | Dilution test made - soft texture after dilution test: grade 3 |
| **Example 15** | 45 % *Vicia faba* flour, 25 % pea protein F85M Roquette, 25 % egg white powder Egg Center Group, 5 % barley malt extract Maltax 40 | Dilution test made - desirable firm texture close to the wished one: grade 4 |

Summarizing the above results, Examples 8 and 10 produced food product with preferred texture and dilution characteristics. Examples 9 and 15 produced food product with more preferred texture and dilution characteristics.

Table 2 summarizes the relative portions of the components and the components' contribution to the protein content for each of the examples.

**Table 2**

| | Relative portions (%) | | | | Contribution to protein (%) | | | | |
|---|---|---|---|---|---|---|---|---|---|
| Example/ Comparative example | **Vicia faba** | **Pea protein** | **Egg white** | **Malt** | **Vicia faba** | **Pea protein** | **Egg white** | **Malt** | **Total** |
| 1 | 100.0 | 0.0 | 0.0 | 0.0 | 26.10 | 0.00 | 0.00 | 0.00 | 26.10 |
| 2 | 90.0 | 10.0 | 0.0 | 0.0 | 23.49 | 8.50 | 0.00 | 0.00 | 31.99 |
| 3 | 85.0 | 15.0 | 0.0 | 0.0 | 22.19 | 12.75 | 0.00 | 0.00 | 34.94 |
| 4 | 98.0 | 0.0 | 0.0 | 2.0 | 25.58 | 0.00 | 0.00 | 0.12 | 25.70 |
| 5 | 95.0 | 0.0 | 0.0 | 5.0 | 24.80 | 0.00 | 0.00 | 0.30 | 25.10 |
| 6 | 75.0 | 20.0 | 0.0 | 5.0 | 19.58 | 17.00 | 0.00 | 0.30 | 36.88 |
| 7 | 65.0 | 30.0 | 0.0 | 5.0 | 16.97 | 25.50 | 0.00 | 0.30 | 42.77 |
| 8 | 60.0 | 35.0 | 0.0 | 5.0 | 15.66 | 29.75 | 0.00 | 0.30 | 45.71 |
| 9 | 55.0 | 40.0 | 0.0 | 5.0 | 14.36 | 34.00 | 0.00 | 0.30 | 48.66 |
| 10 | 50.0 | 45.0 | 0.0 | 5.0 | 13.05 | 38.25 | 0.00 | 0.30 | 51.60 |
| 11 | 75.0 | 0.0 | 25.0 | 0.0 | 19.58 | 0.00 | 21.25 | 0.00 | 40.83 |
| 12 | 72.5 | 12.5 | 12.5 | 2.5 | 18.92 | 10.63 | 10.63 | 0.15 | 40.32 |
| 13 | 55.0 | 30.0 | 10.0 | 5.0 | 14.36 | 25.50 | 8.50 | 0.30 | 48.66 |
| 14 | 25.0 | 45.0 | 25.0 | 5.0 | 6.53 | 38.25 | 21.25 | 0.30 | 66.33 |
| 15 | 45.0 | 25.0 | 25.0 | 5.0 | 11.75 | 21.25 | 21.25 | 0.30 | 54.55 |

## Claims

1. A protein food product comprising *Vicia faba* and pea protein wherein the total protein content is in the range of from 45 weight% to 55 weight% and the *Vicia faba*:pea protein ratio is in the range of from 1.1 to 1.8.

2. The protein food product according to claim 1, comprising 4-6 weight % malt, preferably barley malt extract.

3. The protein food product according to claim 2, comprising 50 weight% to 60 weight% *Vicia faba;* 35 weight% to 45 weight% pea protein; and 4-6 weight% malt.

4. The protein food product according to claim 3, comprising 55 weight% *Vicia faba;* 40 weight% pea protein; and 5 weight% malt.

5. The protein food product according to any of the preceding claims, wherein the ratio of protein from pea protein to protein from *Vicia faba* is in the range of from 2.9 to 1.8.

6. The protein food product according to any of the preceding claims, further comprising egg white.

7. A process for making a protein food product comprising *Vicia faba* and pea protein comprising the steps of
mixing dry ingredients comprising *Vicia faba* and pea protein to form a mixture;
processing the mixture through an extruder; and
drying the extruded material,
wherein the total protein content is in the range of from 45 weight% to 55 weight% and the *Vicia* faba:pea protein ratio is in the range of from 1.1 to 1.8.

8. The process according to claim 7, where the step b) further comprises separately and simultaneously feeding malt to the extruder to form a malt and dry ingredients extruded material.

9. The process according to claim 7 or 8, wherein the extruder temperature is in the range from 144 °C to 147 °C.

10. The process according to claim 9, wherein the extruder temperature is 145 °C.

11. The process according to any of the claims 7-10, wherein the extruded material comprises 4-6 weight% malt, preferably barley malt extract.

12. The process according to any of the claims 7-11, wherein the extruded material comprises 50 weight% to 60 weight% *Vicia faba;* 35 weight% to 45 weight% pea protein; and 4-6 weight% malt.

13. The process according to claim 12, wherein the extruded material comprises 55 weight% *Vicia faba;* 40 weight% pea protein; and 5 weight % malt.

14. The process according to any of the claims 7-13, wherein the dry ingredients comprise egg white.

15. The process according to claim 14, wherein the extruded material comprises 45 weight% *Vicia faba;* 25 weight% pea protein; 25 weight% egg white; and 5 weight % malt.

## Patentansprüche

1. Proteinnahrungsmittel mit *Vicia faba* und Erbsenprotein, wobei der Gesamtproteingehalt im Bereich zwischen 45 Gewichts-% und 55 Gewichts-% liegt und das Verhältnis *Vicia faba*:Erbsenprotein im Bereich zwischen 1,1 und 1,8 liegt.

2. Proteinnahrungsmittel nach Anspruch 1, umfassend 4 bis 6 Gewichts-% Malz, vorzugsweise Gerstenmalzextrakt.

3. Proteinnahrungsmittel nach Anspruch 2, das 50 Gewichts-% bis 60 Gewichts-% *Vicia faba;* 35 Gewichts-% bis 45 Gewichts-% Erbsenprotein und 4 bis 6 Gewichts-% Malz umfasst.

4. Proteinnahrungsmittel nach Anspruch 3, das 55 Gewichts-% *Vicia faba;* 40 Gewichts-% Erbsenprotein und 5 Gewichts-% Malz umfasst.

5. Proteinnahrungsmittel nach einem der vorhergehenden Ansprüche, wobei das Verhältnis von Protein aus Erbsenprotein zu Protein aus *Vicia faba* im Bereich zwischen 2,9 und 1,8 liegt.

6. Proteinnahrungsmittel nach einem der vorhergehenden Ansprüche, das ferner Eiweiß umfasst.

7. Verfahren zur Herstellung eines Proteinnahrungsmittels mit *Vicia faba* und Erbsenprotein mit folgenden Schritten:
Mischen trockener Inhaltsstoffe, die *Vicia faba* und Erbsenprotein umfassen, zur Herstellung einer Mischung;
Verarbeiten der Mischung durch einen Extruder; und
Trocknen des extrudierten Materials,
wobei der Gesamtproteingehalt im Bereich zwischen 45 Gewichts-% und 55 Gewichts-% und das Verhältnis *Vicia faba*:Erbsenprotein im Bereich zwischen 1,1 und 1,8 liegt.

8. Verfahren nach Anspruch 7, wobei der Schritt b) ferner ein separates und gleichzeitiges Zuführen von Malz zum Extruder umfasst, damit ein extrudiertes Material aus Malz und trockenen Inhaltsstoffen entsteht.

9. Verfahren nach Anspruch 7 oder 8, wobei die Extrudertemperatur im Bereich zwischen 144 °C und 147 °C liegt.

10. Verfahren nach Anspruch 9, wobei die Extrudertemperatur 145 °C beträgt.

11. Verfahren nach einem der Ansprüche 7 bis 10, wobei das extrudierte Material 4 bis 6 Gewichts-% Malz, vorzugsweise Gerstenmalzextrakt umfasst.

12. Verfahren nach Anspruch 7 bis 11, wobei das extrudierte Material 50 Gewichts-% bis 60 Gewichts-% *Vicia faba;* 35 Gewichts-% bis 45 Gewichts-% Erbsenprotein und 4 bis 6 Gewichts-% Malz umfasst.

13. Verfahren nach Anspruch 12, wobei das extrudierte Material 55 Gewichts-% *Vicia faba;* 40 Gewichts-% Erbsenprotein und 5 Gewichts-% Malz umfasst.

14. Verfahren nach einem der Ansprüche 7 bis 13, wobei die trockenen Inhaltsstoffe Eiweiß umfassen.

15. Verfahren nach Anspruch 14, wobei das extrudierte Material 45 Gewichts-% *Vicia faba;* 25 Gewichts-% Erbsenprotein; 25 Gewichts-% Eiweiß und 5 Gewichts-% Malz umfasst.

## Revendications

1. Produit alimentaire protéique comprenant de la *Vicia faba* et de la protéine de pois, dans lequel la teneur totale en protéines est comprise entre 45 % en poids et 55 % en poids et le rapport *Vicia faba* / protéine de pois est compris entre 1,1 et 1,8.

2. Produit alimentaire protéique selon la revendication 1, comprenant 4 à 6 % en poids de malt, de préférence d'extrait de malt d'orge.

3. Produit alimentaire protéique selon la revendication 2, comprenant 50 % en poids à 60 % en poids de *Vicia faba* ; 35 % en poids à 45 % en poids de protéine de pois ; et 4 à 6 % en poids de malt.

4. Produit alimentaire protéique selon la revendication 3, comprenant 55 % en poids de *Vicia faba* ; 40 % en poids de protéine de pois ; et 5 % en poids de malt.

5. Produit alimentaire protéique selon l'une quelconque des revendications précédentes, dans lequel le rapport entre la protéine issue de la protéine de pois et la protéine issue de *Vicia faba* est compris entre 2,9 et 1,8.

6. Produit alimentaire protéique selon l'une quelconque des revendications précédentes, comprenant en outre du blanc d'oeuf.

7. Procédé de fabrication d'un produit alimentaire protéique comprenant de la *Vicia faba* et de la protéine de pois, comprenant les étapes consistant à
mélanger des ingrédients secs comprenant de la *Vicia faba* et de la protéine de pois afin de former un mélange ;
transformer le mélange en le faisant passer par une extrudeuse ; et
sécher la matière extrudée,
dans lequel la teneur totale en protéines est comprise entre 45 % en poids et 55 % en poids et le rapport *Vicia faba* / protéine de pois est compris entre 1,1 et 1,8.

8. Procédé selon la revendication 7, dans lequel l'étape b) comprend en outre l'alimentation séparée et simultanée de malt dans l'extrudeuse pour former une matière extrudée à base de malt et d'ingrédients secs.

9. Procédé selon la revendication 7 ou 8, dans lequel la température de l'extrudeuse est comprise entre 144 °C et 147 °C.

10. Procédé selon la revendication 9, dans lequel la température de l'extrudeuse est de 145 °C.

11. Procédé selon l'une quelconque des revendications 7 à 10, dans lequel la matière extrudée comprend 4 à 6 % en poids de malt, de préférence d'extrait de malt d'orge.

12. Procédé selon l'une quelconque des revendications 7 à 11, dans lequel la matière extrudée comprend 50 % en poids à 60 % en poids de *Vicia faba* ; 35 % en poids à 45 % en poids de protéine de pois ; et 4 à 6 % en poids de malt.

13. Procédé selon la revendication 12, dans lequel la matière extrudée comprend 55 % en poids de *Vicia faba* ; 40 % en poids de protéine de pois ; et 5 % en poids de malt.

14. Procédé selon l'une quelconque des revendications 7 à 13, dans lequel les ingrédients secs comprennent du blanc d'oeuf.

15. Procédé selon la revendication 14, dans lequel la matière extrudée comprend 45 % en poids de *Vicia faba* ; 25 % en poids de protéine de pois ; 25 % en poids de blanc d'oeuf et 5 % en poids de malt.
